# EUROPEAN PATENT APPLICATION

(11) **EP 3 037 394 A1**
(43) Date of publication of application: **29.06.2016**
(21) Application number: 15199356.5
(22) Date of filing: 10.12.2015
(51) Int. Cl.: C04B 41/90, C04B 41/50, C04B 41/52

(54) **ENVIRONMENTAL BARRIER COATING WITH ABRADABLE COATING FOR CERAMIC MATRIX COMPOSITES**

(30) Priority: 22.12.2014 US 201414578670
(71) Applicant: General Electric Company, Schenectady, NY 12345 (US)
(72) Inventor: ROSENZWEIG, Larry Steven, Niskayuna, NY New York 12309 (US); JOHNSON, Curtis Alan, Niskayuna, NY New York 12309 (US); MESCHTER, Peter Joel, Niskayuna, NY New York 12309 (US); SARRAFI-NOUR, Reza, Niskayuna, NY New York 12309 (US)
(74) Representative: Pöpper, Evamaria

(57) **Abstract**

Article 10 includes a substrate 20, a bond coat 30 disposed on the substrate 20, an environmental barrier coating 40 disposed on the bond coat 30, and a patterned abradable coating 50 disposed on a second top coat 48. The environmental barrier coating 40 includes an intermediate layer 42 disposed on the bond coat 44, a sealing layer disposed on the intermediate layer 42, a first top coat 40 disposed on the sealing layer, and a second top coat 48 disposed on the first top coat 46. The first top coat 46 is different from the second top coat 48.

## Description

The present disclosure relates generally to high-temperature components, and in particular, to high temperature coatings with an abradable coating operable for protecting the components from exposure to high-temperature environments and for use in providing a seal.

High-temperature materials, such as, for example, ceramics, alloys, and intermetallics, offer attractive properties for use in structures designed for service at high temperatures in such applications as gas turbine engines, heat exchangers, and internal combustion engines, for example. Typically, components of combustion turbines require the use of a coating such as a thermal barrier coating to protect the underlying support materials and structure from the very high temperatures of the working environment. In turbines, each disc of rotating blades in a turbine section of a gas turbine is closely surrounded by a segmented blade ring located adjacent to the blade tips to prevent the working gas from bypassing the blades by going over the blade tips. To allow minimum clearance between the blade tips and the ring segments, the insulating thermal barrier coating is desirably abradable to reduce wear of the tips upon contact with the coating.

There is a need for further high-temperature components, and in particular, to high temperature coatings with an abradable coating operable for protecting the components from exposure to high-temperature environments and for use in providing a seal.

The present disclosure provides in a first aspect, an article which includes a substrate, a bond coat disposed on the substrate, an environmental barrier coating disposed on the bond coat, and a patterned abradable coating disposed on the second top coat. The environmental barrier coating includes an intermediate layer disposed on the bond coat, a sealing layer disposed on the intermediate layer, a first top coat disposed on the sealing layer, and a second top coat disposed on the first top coat. The first top coat is different from the second top coat.

The present disclosure provides in a second aspect, a method for forming an article includes providing a substrate, forming a bond coat disposed on the substrate, forming an intermediate layer on the bond coat, forming a sealing layer on the intermediate layer, forming first top coat on the sealing layer, forming a second top coat on the first top coat, and forming a patterned abradable coating on the second top coat.

Various features, aspects and advantages of this disclosure will become apparent from the following detailed description of the various aspects of the disclosure taken in conjunction with the accompanying drawings, wherein:
FIG. 1 is a schematic drawing of one embodiment of an article in accordance with aspects of the present disclosure having a substrate, a bond coat, an environmental barrier coating, and an abradable coating;
FIG. 2 is a schematic drawing of the article of FIG. 1 further illustrating the environmental barrier coating;
FIG. 3 is a schematic illustration of alumina/silica/alkaline-earth oxide compositional space, drawn for convenience on a ternary-style composition diagram of a type commonly used in the art, with certain compositions highlighted in accordance with embodiments of the present disclosure;
FIG. 4 is a cross-sectional view of a portion of the article for FIG 1, such as a shroud, along with a blade in accordance with aspects of the present disclosure;
FIG. 5 is a top view of an exemplary embodiment of a shroud having an abradable coating according to the present disclosure, showing a trace of passing turbine blades;
FIG. 6 is a cross-sectional view of another embodiment of a portion of an article with aspects of the present disclosure having a substrate, a bond coat, an environmental barrier coating, and an abradable coating; and
FIG. 7 is a flowchart illustrating one embodiment of a method for making an article in accordance with aspects of the present disclosure.

Each embodiment presented below facilitates the explanation of certain aspects of the disclosure, and should not be interpreted as limiting the scope of the disclosure. Moreover, approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value. When introducing elements of various embodiments, the articles "a," "an," "the," and "said" are intended to mean that there are one or more of the elements. The terms "comprising," "including," and "having" are intended to be inclusive and mean that there may be additional elements other than the listed elements. As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable. Any examples of operating parameters are not exclusive of other parameters of the disclosed embodiments. Components, aspects, features, configurations, arrangements, uses and the like described, illustrated or otherwise disclosed herein with respect to any particular embodiment may similarly be applied to any other embodiment disclosed herein.

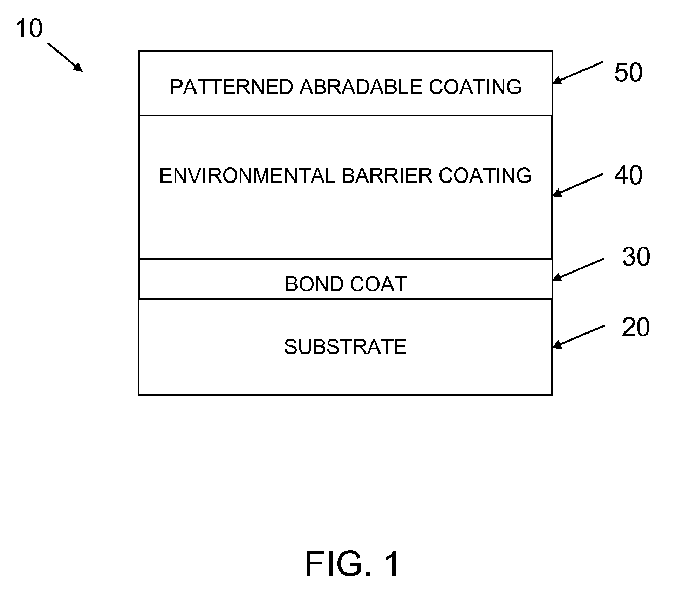

FIG. 1 illustrates an exemplary embodiment of an article 10 in accordance with aspects of the present disclosure. In this embodiment, a bond coat 30 is formed over a substrate 20, an environmental barrier coating 40 is formed over bond coat 30, and an abradable coating 50 is formed over environmental barrier coating 30. In certain embodiments, article 10 may be a component of a gas turbine assembly, such as, for example, a combustion liner, transition piece, shroud, vane, or blade. Such a technique of the present disclosure allows the ability of the environmental barrier coating 40 to protect substrate 20 from exposure to water vapor at high temperatures that may be advantageous for application to silicon-bearing turbine components. In addition, the technique of the present disclosure allows the ability of the abradable coating 50 to maintain a minimum clearance, of example, and better form a seal between the blade tips and ring segments of a shroud. It will be understood that although the application of embodiments of the present disclosure may be described with reference to applications on silicon-bearing substrates for protection against attack by water vapor, such references are exemplary and that embodiments of the present disclosure include substrate materials other than silicon-bearing materials.

Substrate 20 may be made from any suitable material, such as a ceramic, a metal alloy, or an intermetallic material. In some embodiments the substrate comprises a ceramic, for example an oxide, nitride, or carbide. Substrate 20 may include a silicon-containing material, such as silicon nitride, molybdenum disilicide, or silicon carbide. This material, in certain embodiments, is a ceramic-matrix composite material, such as a material made of a matrix phase and a reinforcement phase; in particular embodiments, the matrix phase and the reinforcement phase comprise silicon carbide. It will be understood that although the application of embodiments of the present disclosure may be described with reference to applications on silicon-bearing substrates for protection against attack by water vapor, such references are exemplary and that embodiments may include substrate materials other than silicon-bearing materials.

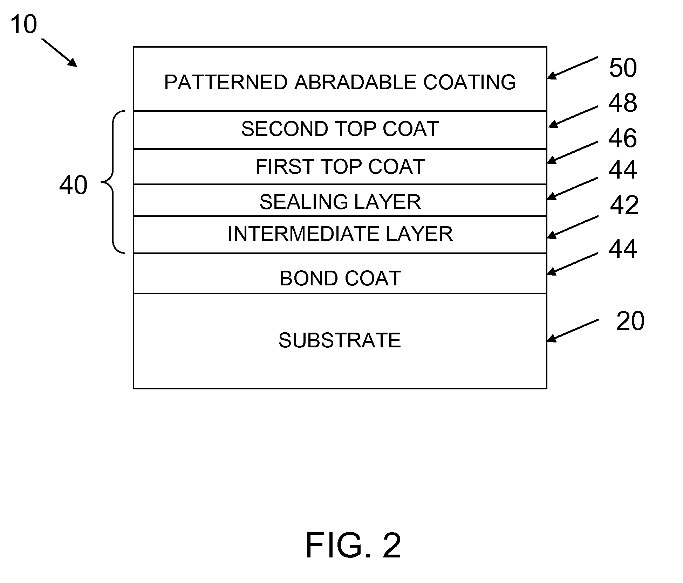

FIG. 2 illustrates various exemplary layers that may comprise environmental barrier coating 40. For example, environmental barrier coating 40 may include a intermediate layer 42 disposed on bond coat 30, a sealing layer 44 disposed on intermediate layer 42, a first top coat 46 disposed on sealing layer 44, and a second top coat 48 disposed on first top coat 46.

In certain applications, bond coat 30 is disposed over substrate 20. Bond coat 30 may be used, for example, to mitigate thermal stresses or to inhibit chemical reactions between substrate 20 and sealing layer 44. In some embodiments, the bond coat may serve to provide oxidation resistance to the substrate and/or to assist in maintaining adherence of environmental barrier coating 44. In some embodiments, such as where substrate 20 is a ceramic or silicon-bearing material, bond coat 30 may include a Si-based bond coat disposed between substrate 20 and environmental barrier coating 40. For example, bond coat 30 in some embodiments may be elemental silicon or a silicide.

In particular embodiments, such as where bond coat 30 contains silicon or silicon oxide, an intermediate layer 42 is disposed between sealing layer 44 and bond coat 30. The intermediate layer may be made of a barrier material that is substantially inert with respect to silicon oxide to promote chemical stability in the coating system. "Substantially inert" means that there is at most only incidental interaction (solubility or reactivity) between silica and the barrier material. Rare-earth disilicates, such as disilicates of yttrium, ytterbium, lutetium, scandium, and other rare-earth elements, are non-limiting examples of suitable barrier materials.

The ability of sealing layer 44 to protect substrate 20 from exposure to water vapor at high temperatures may be advantageous for its application to silicon-bearing turbine components. It will be understood that although the application of embodiments of the present disclosure may be described with reference to applications on silicon-bearing substrates for protection against attack by water vapor, such references are exemplary and that embodiments of the present disclosure may include substrate materials other than silicon-bearing materials.

According to one embodiment of the present disclosure, "sealing layer," may be disposed over the substrate of an article and comprise a self-sealing and substantially hermetic coating. The term "self-sealing" as used herein means that at least a fraction of the coating is made of material ("sealing material") capable of forming a flowable phase, such as a liquid or a glassy phase, at or above a known temperature ("sealing temperature") that is below a melting temperature of the bulk of the coating. This liquid or glassy phase has a viscosity at the sealing temperature suitable to allow the flowable phase to flow into and at least partially fill defects such as cracks and pores, thereby enhancing the ability of the coating to block the movement of detrimental species from the external environment into the substrate. By this mechanism, the coating can seal itself; that is, it can increase its resistance to transport of detrimental species without the use of, for example, a separate sealing material deposited within pores and cracks. Thus, in some embodiments, the sealing layer is substantially free of any additional material disposed within internal surfaces of the sealing layer; this limitation, of course, does not preclude embodiments where an additional layer is disposed over the sealing layer. The term "substantially hermetic" as used herein means that the coating has a gas permeability that is below about 2 x 10⁻¹⁴ cm² (about 2 x 10⁻⁶ Darcy), the detection limit of commonly used measurement techniques.

The fraction of the sealing layer made of the sealing material may be selected depending on a number of factors, including, for example, the expected density of defects that need to be sealed and the expected viscosity of the flowable phase. In some embodiments, this fraction is at least about 1% by volume of total sealing layer; in particular embodiments, the fraction is at least 10% by volume.

The sealing temperature typically is related to a phase transition or transformation that occurs within the sealing material. For instance, the sealing temperature may be chosen to be above a glass transition temperature for a glassy phase that forms in the sealing material. Alternatively, the sealing temperature may be chosen to be at or above a melting temperature, such as a eutectic temperature or a solidus temperature, for a particular phase or composition present in the sealing material. In some embodiments, the sealing temperature is at least about 950 degrees Celsius, and in particular embodiments, the sealing temperature is at least about 1,220 degrees Celsius. In certain embodiments, the operating temperature of the article is selected to be below the sealing temperature, so that the coating will not re-form a flowable phase during service. However, there may be certain applications where having a flowable phase in the sealing layer during service is acceptable or desirable, and so embodiments of the present disclosure also include those where the sealing temperature is below the service temperature.

In general terms, the composition of the sealing layer is selected so that, at a given selected sealing temperature, at least a fraction of the sealing layer is either a liquid or a flowable glassy phase, as described above. The phase transformation behavior as a function of composition and temperature is well known in the art for many materials, and thus the procedure for selecting suitable materials for use in embodiments of the present disclosure will be apparent to practitioners based on the general descriptions presented herein. In addition to the phase transformation characteristics described above, other material characteristics such as, for instance, environmental resistance, ease of manufacture, chemical compatibility with adjacent materials, and other properties, are generally taken into account when selecting a particular material for use in a specific application.

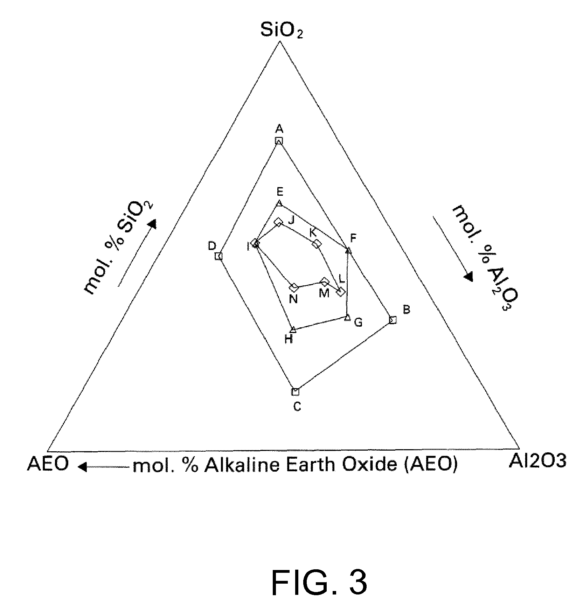

Sealing layer 44 may comprise an alkaline-earth aluminosilicate. These materials are selected because of their utility as environmental barrier coatings for use in such high temperature applications as turbomachinery components. As used herein, the term "alkaline-earth aluminosilicate" is broadly applicable to any material that is the product of mixing or reacting (1) at least one alkaline-earth oxide, (2) silicon oxide, and (3) aluminum oxide, and this term applies to any material having a composition that falls within a ternary isothermal section having alkaline-earth oxide, silicon oxide, and aluminum oxide at respective apexes, as depicted in FIG. 3. It should be noted that, although a ternary isothermal section is depicted, the alkaline-earth oxide component may, in some embodiments, encompass more than one alkaline-earth element, thereby making the overall material a mixture or product of more than three oxides. For example, a composition made by mixing and/or reacting (1) two or more alkaline-earth oxides, (2) silicon oxide, and (3) aluminum oxide, is considered to be within the scope of the term "alkaline-earth aluminosilicate" as used herein. In some embodiments, the alkaline-earth aluminosilicate comprises at least one alkaline-earth element selected from the group consisting of strontium and barium.

Throughout this description, the composition of the sealing layer will be described in terms of equivalent mole percent of aluminum oxide (Al₂O₃, or "alumina"), silicon oxide (SiO₂ or "silica"), and alkaline-earth oxide. This notation is consistent with that commonly used in the art, where, for example, a compound such as barium strontium aluminosilicate is often written as (Ba,Sr) O.Al₂O₃.2SiO₂ (50 mol. % SiO₂+25 mol. % Al₂O₃+25 mol. % (Ba,Sr)O) instead of (Ba,Sr)Al₂Si₂O₈.

Certain alkaline-earth aluminosilicate compositions provide relative advantages due to their ability to form effective amounts of desirable flowable phases (i.e., liquid or glass), to resist high temperature environments, to be economically processed, or a combination of these or other factors. Generally, the silica, alumina, and alkaline-earth oxide are provided in relative proportions that enable the formation of a glassy phase or a liquid phase above a temperature of about 950 degrees Celsius. In one embodiment, the alkaline-earth aluminosilicate comprises up to about 80 mole % silica. In another embodiment, the alkaline-earth aluminosilicate comprises up to about 60 mole % alumina. In yet another embodiment, the alkaline-earth aluminosilicate comprises up to about 50 mole % alkaline-earth oxide.

Depending on the particular application desired for the coating, other alkaline-earth aluminosilicate compositions may be selected for service. The details of composition selection for the seal layer may be controlled by several factors, including, but not limited to, the nature and the volume fraction of the flowable phases, the overall thermal expansion coefficient of the seal layer, the phase composition of the seal layer and the vapor pressure and chemical activity of volatile species formed as a consequence of interaction with the environment (should an open pathway exist between the seal layer and the atmosphere). Referring to FIG. 3, in some embodiments the alkaline-earth aluminosilicate has a maximum silica content that is a function of the respective contents of alumina and alkaline-earth oxide. In one embodiment, the alkaline-earth aluminosilicate has a composition in the range bounded by a region in alumina/silica/alkaline-earth oxide compositional space defined by quadrilateral ABCD in FIG. 3, where point A is (11.8 mole % alumina, 76.1 mole % silica, 12.1 mole % alkaline-earth oxide), point B is (58.6 mole % alumina, 29.8 mole % silica, 11.6 mole % alkaline-earth oxide), point C is (44.3 mole % alumina, 8.2 mole % silica, 47.5 mole % alkaline-earth oxide), and point D is (13.6 mole % alumina, 43.8 mole % silica, 42.6 mole % alkaline-earth oxide). In certain embodiments, the composition is in the range defined by polygon EFGHI in FIG. 3, wherein point E is (22.5 mole % alumina, 55 mole % silica, 22.5 mole % alkaline-earth oxide); point F is (43.8 mole % alumina, 44.6 mole % silica, 11.6 mole % alkaline-earth oxide); point G is (49.3 mole % alumina, 29.6 mole % silica, 21.1 mole % alkaline-earth oxide); point H is (38.4 mole % alumina, 23.6 mole % silica, 38.0 mole % alkaline-earth oxide); and point I is (19.3 mole % alumina, 46.5 mole % silica, 34.2 mole % alkaline-earth oxide). These compositions generally provide a lower volume fraction of flowable phases for a given temperature, and a smaller CTE mismatch with many Si-bearing substrates, than those compositions from outside the EFGHI polygon. Even further reductions in flowable phase volume fraction and in CTE mismatch may be obtained in particular embodiments in which the alkaline-earth aluminosilicate has a composition in the range defined by polygon JKLMNI in FIG. 3, where point J is (25 mole % alumina, 50 mole % silica, 25 mole % alkaline-earth oxide); point K is (33.7 mole % alumina, 47.5 mole % silica, 18.8 mole % alkaline-earth oxide); point L is (45.5 mole % alumina, 36.4 mole % silica, 18.1 mole % alkaline-earth oxide); point M is (39.6 mole % alumina, 38.0 mole % silica, 22.4 mole % alkaline-earth oxide); point N is (31.5 mole % alumina, 37.0 mole % silica, 31.5 mole % alkaline-earth oxide); and point I is as defined above.

With reference again to FIG 2, a plurality of top coats, in some embodiments, is disposed over sealing layer 44. The top coats may be used to provide thermal insulation, environmental protection, or a combination of these functions. The selection of a suitable top coat material may depend on the type of environment the article is to be exposed to, the composition of the underlying coatings and substrate, the cost of processing, and other factors known in the art. In some embodiments, the top coat may be a ceramic material. Many classes of ceramic materials are known for their ability to serve as thermal and/or environmental barrier coatings; these materials include, but are not limited to, silicates, aluminosilicates, and yttria-stabilized zirconia. In certain embodiments, the top coat contains a rare earth monosilicate and/or rare earth disilicate. For example, the plurality of top coats may be a dual-layer coating, with an inner layer or first top coat 48 of rare earth disilicate, and an outer layer or second top coat 48 of rare earth monosilicate. The rare earth elements associated with these monosilicate and disilicate materials, in some embodiments, may include one or more of yttrium, ytterbium, lutetium, and scandium. A particular example is where the outer layer is yttrium monosilicate and the inner layer is a rare earth disilicate (such as yttrium disilicate, for instance).

The thickness of any of the various coating layers described above is generally chosen to provide adequate protection for a given service time while keeping thermal stresses to a sustainable level. Moreover, coating thickness may also be determined by the ability of a selected coating method to produce a continuous layer over the deposition area. Non-limiting examples of approximate thickness ranges for the various coatings include the following: for the sealing layer, from about 25 micrometers to about 150 micrometers; for the bond coat, from about 75 micrometers to about 125 micrometers; for the intermediate layer, from about 50 micrometers to about 100 micrometers; for the top coat layer, from about 50 micrometers to about 500 micrometers. For the dual-layer top coat embodiment described above, the yttrium monosilicate outer layer can be from about 25 micrometers to about 50 micrometers in certain embodiments.

The coatings described above can be deposited using coating technology known to the art. Embodiments of the present disclosure are of particular interest where methods for coating deposition are used that typically result in a substantial amount of cracking and internal open porosity. Plasma spray technology and slurry-based coating processes are examples of commonly used coating methods that generate coatings with such features. In such cases, the presence of the sealing layer serves to considerably enhance the hermeticity, and thus the efficacy of protection, of the coating. Moreover, in some embodiments the sealing layer may be effective in sealing cracks or other damage to the coating that may occur after processing, including for instance damage created during installation of components, or service of components.

In order to activate the self-sealing nature of the sealing layer, the sealing layer is heated to the sealing temperature (described above) at which at least a portion of the sealing layer will flow; the flowable portion thus moves into cracks and pores and, upon solidification, seals off these defects that would otherwise serve as pathways for detrimental species, such as water vapor, from the environment to the substrate. Depending upon the nature of the coating, the economics of the processing, and other factors, the heating step may be performed immediately after depositing the sealing layer, after all coatings have been deposited but prior to putting the finished article into service, or even during service itself if the service temperature is allowed to be sufficiently high.

The sealing temperature is maintained for an effective time to allow time for the flowable material to reach and at least partially fill or otherwise seal off the defects. The length of time needed to achieve this is generally selected based on the number and nature of the defects to be sealed and the quantity of flowable material available in the sealing layer. In one embodiment, the sealing layer is heated to a sealing temperature in a range from about 950 degrees Celsius to about 1,350 degrees Celsius for a time in the range from about 30 minutes to about 10 hours; in particular embodiments the time is in the range from about 30 minutes to about 4 hours. In some embodiments, the temperature is in the range from about 950 degrees Celsius to about 1,050 degrees Celsius for a time in the range from about 30 minutes to about 4 hours, while in other embodiments the temperature is from about 1,250 degrees Celsius to about 1,350 degrees Celsius for a time in the range from about 30 minutes to about 4 hours. The heating step to seal the coating may be performed in air, vacuum, an inert atmosphere, or other environment, depending at least in part on the requirements of the materials being heated (i.e., the substrate and other coating layers, if present).

Further description and examples of the environmental barrier coatings suitable for use in the articles of the present disclosure are found in U.S. Patent Application Publication No. 2011/0052925, by Sarrafi-Nour et al. entitled "Articles For High Temperature Service And Methods For Their Manufacture", the entire contents of which are incorporated herein by reference.

With reference again to FIG. 2, substrate 20 may be a silicon containing substrate and bond coat 30 may be provided to reduce the gaseous products that would otherwise be emitted by reaction of the silicon-containing substrate with oxidants. The bond coat may preferentially react with oxidants to form non-gaseous products. Preferably, the bond coat comprises silicon and is applied between a silicon carbide (SiC) or silicon nitride (Si₃N₄) substrate and the environmental barrier coating 40.

Suitable silicon-containing substrates include silicon carbide (SiC) and silicon nitride (Si₃N₄), as well as silicon alloys such as niobium silicon alloys, molybdenum silicon alloys and the like. The silicon-containing substrate can be a monolith or composite. A composite can comprise a reinforcing fiber, particulate or whisker and a silicon-based matrix. Exemplary fibers, particulate or whiskers are silicon carbide-containing, carbon-containing, silicon-containing, or mixtures thereof. The fibers, particulate or whiskers optionally can have at least one coating, such as a silicon nitride, silicon boride, or silicon carbide coating. The matrix can be processed by melt infiltration (MI), chemical vapor infiltration (CVI) or other technique. Exemplary silicon-containing substrates include a monolithic silicon carbide (SiC) and silicon nitride (Si₃N₄), a silicon carbide (SiC) fiber-reinforced silicon carbide (SiC) matrix composite, carbon fiber-reinforced silicon carbide (SiC) matrix composite, and a silicon carbide (SiC) fiber-reinforced silicon nitride (Si₃N₄) composite. The preferred substrate comprises a silicon carbide (SiC) fiber-reinforced silicon-silicon carbide (Si--SiC) matrix composite processed by silicon melt infiltration.

The silicon of the bond coat preferentially reacts with oxygen to form a non-gaseous product to reduce the formation of voids that would otherwise deteriorate the bond between silicon-containing substrate and the environmental barrier coating 40. Additionally, the resulting silicon oxide (SiO₂) has a low oxygen permeability. Hence, the bond coat acts as a protective barrier that deters permeation of oxygen into the substrate layer by at least rwise accumulate at the interface between the external coating and silicon-containing substrate. Further, the product of the preferential reaction provides a barrier to permeation of unreacted oxygen into the silicon-containing substrate.

A silicon bond coat may provide additional advantages. Silicon has a coefficient of thermal expansion (CTE) similar to that of silicon carbide (SiC). Hence, a silicon bond coat may minimize thermal stresses between the environmental barrier coating and the silicon-containing substrate.

A preferred article of the present disclosure may include a silicon-containing substrate that is a melt infiltrated silicon-silicon carbide (SVSiC) matrix reinforced with silicon carbide (SiC) fibers and a bond coat comprising silicon. The matrix of a melt infiltrated silicon-silicon carbide (Si/SiC) composite comprises about 10-20 volume percent (vol %) residual silicon. This residual substrate silicon reduces the coefficient of thermal expansion (CTE) mismatch between the silicon-containing substrate and the silicon bond coat. In this embodiment, the silicon bond coat may be applied as an extension of the infiltration process in which excess silicon infiltrate is used to build up a silicon or silicon-rich layer/coating on the silicon-containing substrate's surface. Also, the silicon bond coat may be applied by simply dipping the silicon-containing substrates into a silicon melt. Both applications provide a dense and uniform silicon layer/coating on the silicon-containing substrate's surface. The environmental barrier coating 40 can then be applied directly onto the silicon bond coat without any major treatment. Preoxidation of the silicon layer/coating to form a top silicon oxide (SiO₂) layer can improve bonding of oxide external barrier coatings. The silicon bond coat may also be applied by chemical vapor deposition (CVD), thermal spray, a solution based technique or other method.

When the remaining layers of the environmental barrier coating include an oxide that has a larger coefficient of thermal expansion (CTE) than the silicon-containing substrate, stresses can arise during temperature changes such as during start-up or shut down or as a result of "hot-spots" in the coating at high temperatures (above about 1,000 degrees C.). Thermal stresses are a main cause of coating failure and bond coat failure in these articles. The bond coat is of particular advantage when used with these articles since it also serves as a stress-relieving compliant zone. Silicon deforms plastically at temperatures higher than about 600 degrees C. (while maintaining a shear strength over 10 Mpa). This plasticity reduces thermal stresses exerting on the layer/coating, and hence improves layer/coating life span.

The capability of a bond coat can be customized to withstand a higher temperature diffused through other layers of the environmental barrier coating by using a silicon-alloy bond coat or by adding a refractory second phase into a silicon bond coat. Silicon-based refractories, silicon carbide (SiC) and silicon nitride (Si₃N₄) can be used for this purpose so long as the proportion of silicon carbide (SiC) and silicon nitride (Si₃N₄) is limited so that the purpose of eliminating gas generation is not defeated. Generally, the volume percent of silicon carbide (SiC) and silicon nitride (Si₃N₄) should be limited to about 20 percent or less. Other non-gas generating refractory phases, such as silicon oxide (SiO₂) and aluminum oxide (Al₂O₃), may also be used provided that they do not deteriorate the oxidation resistance of the bond coat.

Fiber-reinforced silicon carbide (SiC) matrix compositions can have a CVD silicon carbide (SiC) overcoat to protect the fibers and matrices. Some or all of the silicon carbide (SiC) can be replaced with the silicon or silicon-alloy bond coat. Silicon has a coefficient of thermal expansion (CTE) lower than that of silicon carbide (SiC). Hence, the silicon bond coat can comprise a graded layer/coating with higher silicon carbide (SiC) concentration at a bond coat-substrate interface than at an interface between the bond coat and the environmental barrier coat. The silicon concentration may be greater toward the environmental barrier coat than at the interface between the bond coat-substrate interface. The final strata of the bond coat will consist essentially of silicon. Codeposition of silicon and silicon carbide is possible, e.g., by controlling the hydrogen/silicon (H/Si) ratio when silicon tetrachloride (CH₃ SiCl₃) and hydrogen are used.

Further description and examples of substrates and bond coats suitable for use in the articles of the present disclosure are found in U.S. Patent No. 6,299,988 issued to Wang et al., entitled "Ceramic With Preferential Oxygen Reactive Layer", the entire contents of which are incorporated herein by reference.

With reference again to FIG. 1, abradable coating 50 may have a substantially smooth surface or a patterned surface that is configured to abrade. For example, article 10 may be a turbine shrouds configured to abrade when a turbine blade contacts the shroud. A substantially smooth abradable surface of the shroud may maintain a flowpath solidity but can result in severe blade tip wear. A patterned abradable shroud surfaces may result in reduced blade tip wear as compared to unpatterned or substantially smooth-flowpath shrouds, but allow leakage across the blade tip that leads to decreased turbine efficiency.

In other embodiments, abradable coating 50 may be a hybrid architecture that balances the apparently contradictory requirements of high flowpath solidity, low blade tip wear, and high durability.

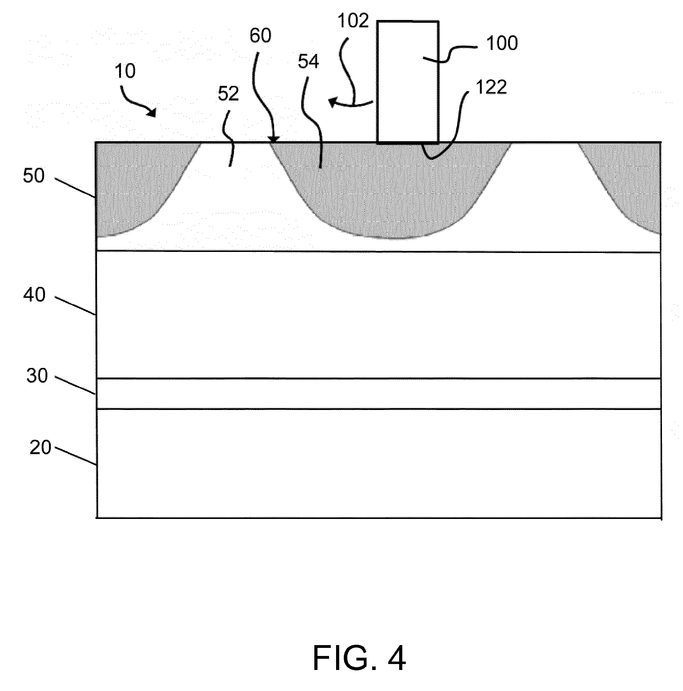

With reference to FIG. 4, abradable coating 50 may include first regions 52 and second regions 54. In some embodiments, the second regions 54 may be more intrinsically abradable than the first regions 52. For example, an exemplary abradable shroud coating including only the material of the second regions 54 may be more easily abraded by tips of rotating turbine blades or a turbine as compared to a substantially identical exemplary abradable shroud coating that includes the material of the first regions 52 in place of the material of the second regions 54. The first regions 52 may be a patterned structure or scaffold of relatively dense ridges or relative "high" portions that provide mechanical integrity while supporting blade tip 122 incursion without undue blade wear. Second regions 54 may include a highly friable microstructure that readily abrades in response to blade incursion while having relatively poor mechanical integrity as a stand-alone structure as compared to the first regions or scaffold 52. The highly friable microstructure of the second regions 54 can be achieved, for example, using a relatively porous and/or microcracked microstructure as compared to the first regions 52. As shown in FIG. 4, second regions 54 may be corralled by the relatively dense scaffold or first regions 52 so as to facilitate blade incursion while remaining substantially intact during typical turbine operation, including operation under typical erosive, gas loading and dynamic conditions. In some embodiments, the first and second regions 52 and 54 of the abradable coating 50 may together form a continuous, substantially smooth flowpath surface 60. The first and second regions 52 and 54 of the abradable coating 50 may thereby form a thermo-mechanically robust abradable structure that balances the apparently contradictory requirements of high flowpath solidity, low blade tip wear, and high durability.

In some embodiments, second regions 54 may be less dense than first regions 52. For example, in some embodiment second regions 54 may include about 20% to about 65% porosity, while first regions 52 may include less than about 20% porosity. More preferably, in some embodiments second regions 54 may include about 25% to about 50% porosity, while first regions 54 may include less than about 15% porosity. In some embodiments, both the first and second regions 52 and 54 of the abradable coating 50 may be capable of withstanding temperatures of at least about 1,150 degrees Celsius, and more preferably at least about 1,300 degrees Celsius.

In some embodiments, the method of manufacturing second regions 54 of the abradable coating 50 may include use of one or more fugitive filler material to define the volume fraction, size, shape, orientation, and spatial distribution of the porosity. In some such embodiments, the filler material may include fugitive materials and/or pore inducers, such as but not limited to polystyrene, polyethylene, polyester, nylon, latex, walnut shells, inorganic salts, graphite, and combinations thereof. The filler material of second regions 54 may act to decrease the in-use density of the second material. In some embodiments, at least a portion of the filler material of second regions 54 may be evaporated, pyrolized, dissolved, leached, or otherwise removed from second regions 54 during the manufacturing process (such as subsequent heat treatments or chemical treatments or mechanical treatments) or during use for example of article 10 such as a shroud. In some embodiments, the method of manufacturing second regions 54 of abradable coating 50 may include use of one or more sintering aids, such as to form lightly sintered powder agglomerates.

In some embodiments, first and second regions 52 and 54 of abradable coating 50 may include substantially the same composition or material. For example, first and second regions 52 and 54 may both substantially include stabilized zirconia (such as with metallic substrates) or rare earth silicates (such as with ceramic substrates). In some embodiments, both first and second regions 52 and 54 may substantially include stabilized zirconia, and substrate 20 (FIG. 1) may be nickel-based and/or cobalt-based. In some embodiments, both first and second regions 52 and 54 may substantially include rare earth silicates, and the substrate may be SiC-based and/or Mo-Si-B-based. In some other embodiments, the composition or material of first and second regions 52 and 54 may substantially differ. In some embodiments, at least one of first and second regions 52 and 54 may substantially include, or be formed of, one or more materials of the underlying environmental barrier coating 40.

As shown in FIG. 4, second regions 54 may be substantially corralled by the first regions or scaffold 52 (i.e., positioned in-between or within the pattern of the scaffold 52). First and second regions 52 and 54 may be arranged or configured such that the passing turbine blades pass over and potentially rub into flowpath surface 60, thereby removing both first and second regions 52 and 54. In this way, first regions or scaffold 52 may provide mechanical integrity to protect the substantially friable second regions 54 from being damaged during operation by, for example, erosion, while supporting blade tip 122 incursion without undue blade wear. First and second regions 52 and 54 may be arranged in any pattern, arrangement, orientation or the like such that second regions 54 are positioned between (i.e., corralled by) first regions 52, as illustrated in FIG. 4. In some embodiments, first and second regions 52 and 54 may be arranged such that the denser first regions 52 effectively shield the more friable second regions 54 from erosive flux.

In some exemplary embodiments, first regions 52 may include or be defined by ridges extending from environmental barrier coating 40 to flowpath surface 60. For example, first regions 52 may include periodic ridges that extend from environmental barrier coating 40. In some embodiments, adjacent ridges of first regions 52 may be isolated from each other. In some other embodiments, as is illustrated in FIG. 4, adjacent ridges of first regions 52 may be contiguous via their bases. In some embodiments, the ridges (and/or other portions of first regions 52) may extend along a direction, for example, at least generally perpendicular to the direction of the passing turbine blades. In some embodiments, first regions 52 may extend along a path or shape that substantially matches the camberline of the turbine blades. In some embodiments, first region 52 comprises a set of substantially periodically spaced ridges arranged such that the direction of translation of the periodic ridges is substantially parallel to the blade passing direction. In some alternative embodiments, the ridges of first region 52 may have portions that are non-parallel to each other, comprising patterned ridge architectures such as parallelograms, hexagons, circles, ellipses, or other open or closed shapes. In some embodiments, each first region or ridge 52 is substantially equidistant from its adjacent first region or ridges 52. In some alternative embodiments, one or more first region or ridge 52 may be variably spaced from its adjacent first region or ridge 52.

In some embodiments, at least one of the first and second regions 52 and 54 may extend linearly, non-linearly (e.g., may include one or more curves, bends, or angles), may or may not intersect with each other, may form a regular or irregular pattern, or consist of combinations thereof or any other arrangement, pattern or orientation such that - during incursions - the turbine blades pass through first and second regions 52 and 54, and first regions 52 corral the second regions 54 (i.e., second regions 54 are positioned between first regions 52).

In the exemplary embodiment shown in FIG. 4, first regions 52 include relatively thick ridges such that the thickness-averaged ridge solidity is about 30%. In some embodiments, first regions 52 may extend over environmental barrier coating 40, and second regions 54 may extend substantially over valleys or relatively thin portions of first regions 52. In this way, second regions 54 may fill valleys of first regions 52. In some other embodiments (not shown), the first regions and the second regions may extend from environmental barrier coating 40 to the flowpath surface 60.

In some embodiments, the center-to-center distance between adjacent ridges of first regions 52 may be within the range of about 1 millimeter and 6 millimeters, and more preferably within the range of about 2 millimeters and 5 millimeters. In some embodiments, the solidity of first regions 52, defined as the fraction of the total surface area of the flowpath surface 60 comprised of first regions 52, may be within the range from about 2% to about 50%, and more preferably may be within the range from about 5% to about 20%.

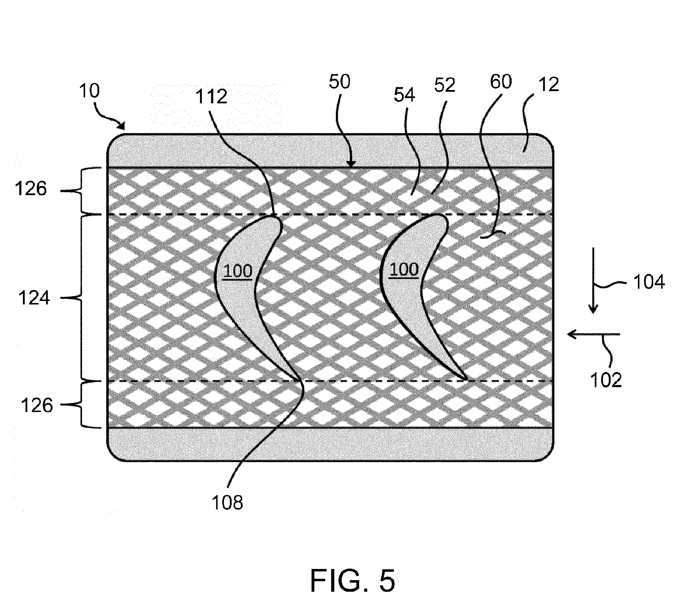

As shown in FIG. 5, an article 10 such as a shroud may include an exemplary abradable coating 50 overlying at least a portion of shroud 10, such as over an outer surface of environmental barrier coating system 40 on shroud 10. In some embodiments, the abradable coating 50 may define the flowpath surface 60 of shroud 10 such that flowpath surface 60 faces the centerline of a turbine when shroud 10 and a rotor are assembled. For example, abradable coating 50 may form flowpath surface 60 such that it faces or is directed toward, at least generally, rotating turbine blades 100 having tips 122 (FIG. 4) passing across the flowpath surface 60 of shroud 10. In some embodiments, blades 100 may abrade, wear, or otherwise remove portions of the abradable coating 50 along a blade track 124 as the turbine blades 100 pass over (and through) abradable coating 50. Incursion of the turbine blade tips 122 (FIG. 4) within abradable coating 50 may form wear track 124 within abradable coating 50 during contact therewith. As shown in FIG. 5, an arrow 102 indicates a direction of translation of the turbine blade 100 with respect to abradable coating 50 as results from a rotation of the turbine rotor. Arrow 104 indicates the axial direction of a fluid flow with respect to abradable coating 50 and blades 100. The turbine blade tips 122 (FIG. 4) may include a leading edge 112 and a trailing edge 108, and the leading edge 112 and a trailing edge 108 may define the boundaries of the wear track 124 as indicated by the dashed lines in FIG. 5. The wear track 124 may include only a portion of abradable coating 50 such that at least one non-abraded portion 126 of abradable coating 50 positioned outside the boundaries of wear track 124 may remain unworn. Abradable coating 50 may include first regions 52 corralling second regions 54, such that blade track 124 extends across first and second regions 52 and 54 (e.g., across a plurality of first and second regions 52 and 54), as described above.

In some embodiments, the thickness of abradable coating 50 (i.e., first and second regions 52 and 54), as measured from the outer-most surface of the environmental barrier coating 40 to the flowpath surface 60 may be within the range of about 1/10 millimeter and about 2 millimeters, and more preferably within the range of about 1/5 millimeters and about 1 and 1/2 millimeters. In some such embodiments, abradable coating 50 (i.e., first and second regions 52 and 54) may be initially manufactured thicker than as described above, and machined or otherwise treated to achieve the thicknesses described above. For example, after forming or manufacturing abradable coating 50 with first and second regions 52 and 54, abradable coating 50 may be machined, polished, or otherwise treated by removing material from abradable coating 50 so as to provide a desired clearance between the blade tips 122 (FIG. 4) and the flowpath surface 60. The treating of abradable coating 50 from the as-manufactured condition to create the desired flowpath surface 60 may reduce the thickness of abradable coating 50. In some embodiments, the flowpath surface 60 may be substantially smooth. In some embodiments, the flowpath surface 60 may include some curvature in the circumferential and/or axial directions. As another example, the substrate 20 (FIGS. 1 and 2) may include curvature, and the curvature of the flowpath surface 60 may substantially conform to that of substrate 20 (FIGS. 1 and 2).

Further description and examples of abradable coatings suitable for use in the articles of the present disclosure are found in U.S. Patent Application Serial No. 14/300,520, filed June 10, 2014, by Lipkin et al., entitled "Abradable Coatings", the entire contents of which are incorporated herein by reference.

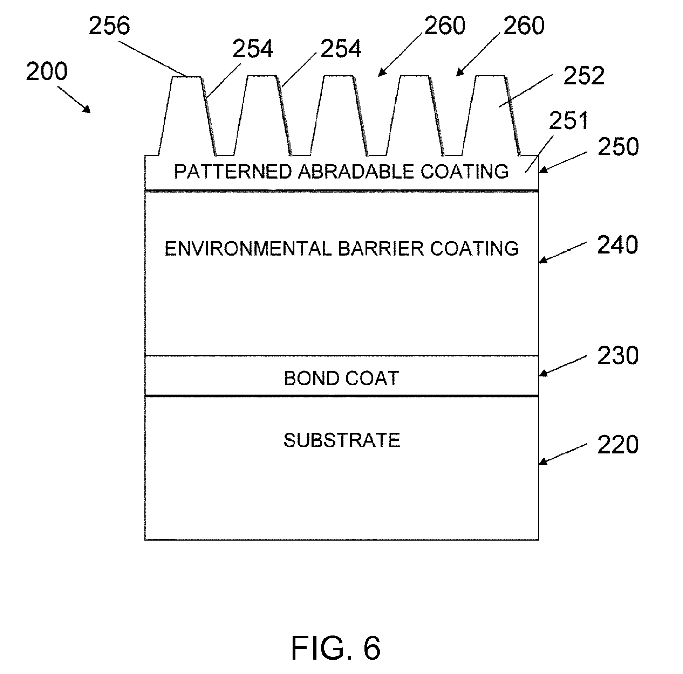

FIG. 6 illustrates another exemplary embodiment of an article 200 in accordance with aspects of the present disclosure. In this embodiment, a bond coat 230 is formed over a substrate 220, an environmental barrier coating 240 is formed over bond coat 230, and a patterned abradable coating 250 is formed over environmental barrier coating 240. The bond coat and the environmental barrier coating may be similar to and incorporate aspects of the bond coats and environmental barrier coatings of article 10 (FIGS. 1 and 2) described above.

In this embodiment, patterned abradable coating 250 may include a patterned surface having spaced-apart solid portions 252 defining a plurality of voids 260. The patterned abradable coating 250 may have a base portion 251 which extends over the environmental barrier coating. Base portion may extend completely over the environmental barrier coating. The ratio of solid portions to the voids may be about 1 to 1. In other embodiments, the solids may occupy between about 40% to about 60% of the portion of the patterned abradable coating defining the solid and void portions. In some embodiments, the patterned abradable coating may be a plurality of projections have tapered sides 254 and a flat upper surface 256. The tapered sides may extend generally the thickness of the patterned abradable coating. The projections may be fustoconical or may have other suitable configurations. The patterned abradable coating may be capable of withstanding temperatures of at least about 1,150 degrees Celsius, and more preferably at least about 1,300 degrees Celsius. Patterned abradable coating 250 may include one or more of the materials for forming abradable coating 50 (FIGS. 1 and 2) described above. Abradable coating 250 may be deposited or formed employing one or more of the processing steps for depositing or forming abradable coating 50 (FIGS. 1 and 2) described above. For example, the voids may be formed by the removal of material from a continuous solid material surface by a method such as ultrasonic machining. Other methods include end-milling, drilling, laser ablation, and electron beam ablation. An alternative to the removal of material from the surface is to prepare the material in a manner where voids at the surface result from the method of forming the material. In addition, the solid portions of abradable coating 250 may be configured in shape similar to either of the first regions or the second regions of abradable coating 50 (FIGS. 1 and 2) described above. For example, the patterned abradable coating may be arranged in any pattern, arrangement, orientation or the like. For example, the voids may surround the solid portions, the solid portions may surround the voids, neither the voids nor the solid portions may surround the other, or a combination thereof. For example, the solid portions may from elongated tapered ridges that extend from the environmental barrier coating to the flowpath surface. In some embodiments, the thickness of abradable coating 250 as measured from the outer-most surface of the environmental barrier coating 240 to a flowpath surface may be within the range of about 1/10 millimeter and about 2 millimeters, and more preferably within the range of about 1/5 millimeters and about 1 and 1/2 millimeters.

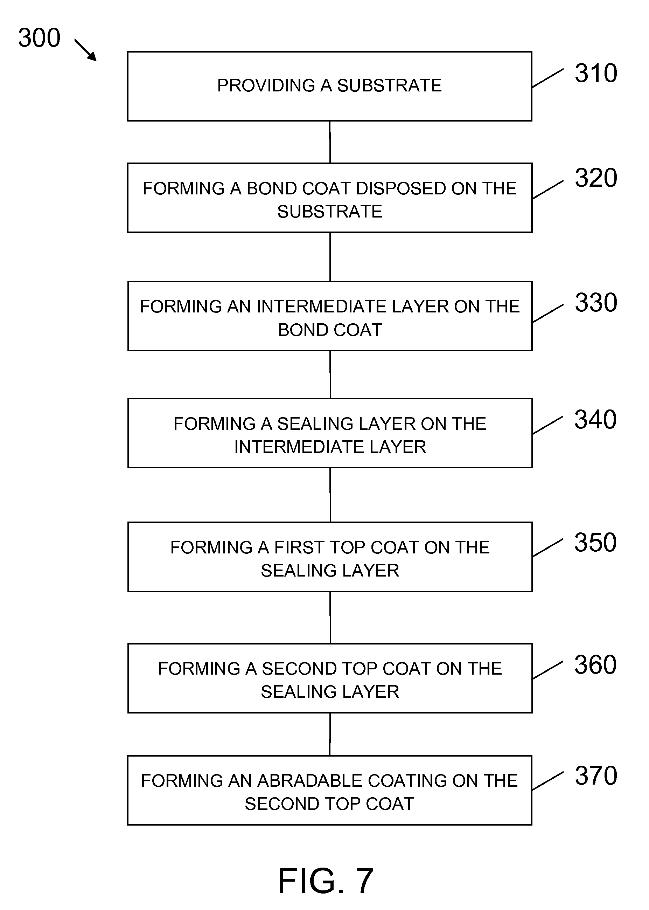

FIG. 7 illustrates a method 300 for forming an article such as a shroud. In this exemplary embodiment, method 300 may include at 310 providing a substrate, at 320 depositing a bond coat disposed on the substrate; at 330 depositing an intermediate layer on said bond coat, at 340 depositing a sealing layer on said intermediate layer, at 350 depositing first top coat on said sealing layer, at 360 depositing a second top coat on said first top coat, and at 370 depositing an abradable coating on said second top coat.

The substrate, bond coat, environmental barrier coating, and abradable coating may include the materials described above. In some exemplary embodiments, depositing the bond coat and environmental barrier coating may include spraying, rolling, printing or otherwise mechanically and/or physically applying the coating system over at least a portion of a surface of the substrate. In some embodiments, the depositing may include treating as-applied material to cure, dry, diffuse, sinter or otherwise sufficiently bond or couple the materials to the substrate and to each other.

In some embodiments, the depositing of the abradable layer may include forming a relatively dense abradable scaffolds or first regions, and forming the relatively porous friable filler regions in-between the dense abradable scaffold. For example, forming the relatively dense abradable scaffolds or first regions may include thermally spraying the relatively dense abradable material through a patterned mask to form the scaffold pattern or structure, direct-write thermal spraying the relatively dense abradable material in the form of scaffold, dispensing a slurry paste in the form of a green scaffold pattern on the coating system followed by heat treating the slurry paste so as to sinter it and form the relatively dense scaffold, applying a continuous blanket layer of relatively dense abradable material, followed by removal of portions of the blanket layer to selectively define the scaffold or pattern of the relatively dense abradable material, and/or screen printing, slurry spraying or patterned tape-casting ceramic powder with binder and, potentially, one or more sintering aid, so as to form a green scaffold or pattern.

For example, forming the relatively porous friable filler regions may include thermal spraying (with or without a mask) in-between the relatively dense abradable scaffold or pattern, applying a slurry, and/or applying a relatively porous friable filler by tape-casting or screen printing.

The abradable coating may be treated. For example, the treating may include mechanically treating such as grinding, sanding, etching, etc, heat treating such as sintering, etc. The forming of the abradable coating may include forming the relatively porous friable portions first by the processes noted above or by other processes followed by forming the relatively dense scaffold portions by the process note able or by other processes. The forming of the abradable coating may include forming a substantially continuous blanket layer of relatively porous friable material followed by selectively densifying portions of the substantially continuous blanket layer of relatively porous friable material to form a relatively dense abradable scaffold within the layer.

The relatively dense abradable scaffolds or first regions may includes a ceramic material, the friable filler may be a ceramic powder that may include at least one additive, such as a fugitive filler material, pore inducer, and/or sintering aid, such that the at least one additive is co-deposited, such as via thermal spray, with the ceramic powder.

Further description and examples of methods for forming abradable coatings suitable for use in the present disclosure are found in U.S. Patent Application Serial No. 14/300,666, filed June 10, 2014, by Lipkin et al., entitled "Methods Of Manufacturing A Shroud Abradable Coating", the entire contents of which are incorporated herein by reference.

As described above, the technique of the present disclose is directed to an article such as a turbine component that may include a ceramic matrix composite or a monolithic ceramic to which a bond coat and an environmental barrier coating are applied followed by an patterned abradable coating for clearance control. In some embodiments, the bond coat a silicon layer overlying a substrate, the environmental barrier coating may include, in order of application, an intermediate layer comprising a rare earth disilicate, a sealing layer or water vapor barrier layer including or consisting of barium strontium aluminosilicate (BSAS), another layer of rare earth disilicate, and a layer of rare earth monosilicates. Each of these layers may be applied as continuous coating layers using thermal spray techniques. On top of the bond coat and four layer environmental barrier coating, an abradable coating is applied, for example, also by thermal spray techniques. This five layer architecture and abradable may provide a high performance and high temperature coating system that is capable of withstanding operating temperatures of at least 2,400 degrees Fahrenheit such as in a gas turbine or aero turbine environment.

As will be appreciated, each layer may have a specific role in the protection of the substrate or CMC component. For example, the silicon bond coat may provide the primary oxidation protection of the CMC component. The next rare earth disilicate layer may act as a chemical barrier transition layer between the next layer, BSAS, and the silicon bond coat layer. The BSAS layer may functions as a water vapor barrier that protects the silicon bond coat from degradation due to accelerated oxidation from water vapor intrusion produced by, for example, the hot combustion gases within the operating environment of a turbine. Above the BSAS layer is another rare earth disilicate layer that may functions to protect the BSAS from volatization. Similarly, the final continuous layer of rare earth monosilicate protects the rare earth disilicate beneath it from excessive volatization. The purpose of the final abradable coating is to provide clearance control between a stationary CMC component and a rotating component such as an airfoil component, and may improve operating efficiency of the turbine engine.

From the present description it will be appreciated that CMC components exposed to high temperatures such as in gas turbines and jet engines desirably need to be protected against water vapor oxidation and vaporization of silicon and silicon carbide in CMC components, and that the environmental barrier coating along with an abradable coating provide such protection at high temperatures. The environmental barrier coating along with abradable coating may provide sufficient, long term protection to the underlying CMC components at operating temperatures encountered within gas turbines and jet engines.

It is to be understood that the above description is intended to be illustrative, and not restrictive. Numerous changes and modifications may be made herein by one of ordinary skill in the art without departing from the general spirit and scope of the disclosure as defined by the following claims and the equivalents thereof. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Also, the term "operably" in conjunction with terms such as coupled, connected, joined, sealed or the like is used herein to refer to both connections resulting from separate, distinct components being directly or indirectly coupled and components being integrally formed (i.e., one-piece, integral or monolithic). It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments have been described, it is to be understood that aspects of the disclosure may include only some of the described embodiments. Accordingly, the disclosure is not to be seen as limited by the foregoing description, but is only limited by the scope of the appended claims.

This written description uses examples, including the preferred mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. An article comprising:
   a substrate;
   a bond coat disposed on said substrate;
   an environmental barrier coating disposed on said bond coat, said environmental barrier coating comprising:
      an intermediate layer disposed on said bond coat;
      a sealing layer disposed on said intermediate layer;
      a first top coat disposed on said sealing layer;
      a second top coat disposed on said first top coat, said first top coat being different from said second top coat; and
      a patterned abradable coating disposed on said second top coat.
2. The article of clause 1, wherein said patterned abradable coating comprises solid portions and voids.
3. The article of any preceding clause, wherein said solid portions comprises tapered sides extending generally though the thickness of said patterned abradable coating.
4. The article of any preceding clause, wherein:
   said bond coat comprises silicon;
   said intermediate layer comprises a rare earth disilicate;
   said sealing layer comprises barium strontium aluminosilicate;
   said first top coat comprises a rare earth disilicate; and
   said second top coat comprises a rare earth monosilicate.
5. The article of any preceding clause, wherein said patterned abradable coating comprises solid portions and voids.
6. The article of any preceding clause, wherein said solid portions comprises tapered sides extending generally though the thickness of said patterned abradable coating.
7. The article of any preceding clause, wherein said substrate comprises a ceramic matrix composite, a monolithic ceramic layer, or combination thereof.
8. The article according to any preceding clause, wherein said bond coat comprises silicon.
9. The article according to any preceding clause, wherein said sealing layer comprises at least one hermetic self-sealing layer formed from a mixture comprising an alkaline earth metal aluminosilicate and a rare-earth silicate.
10. The article according to any preceding clause, wherein said sealing layer comprises barium strontium aluminosilicate.
11. The article of any preceding clause, wherein said abradable coating comprises a thickness within a range of about 1/10 millimeter and about 2 millimeters.
12. The article of any preceding clause, wherein said abradable coating comprises zirconia.
13. The article of any preceding clause, wherein said substrate comprises a ceramic matrix composite, a monolithic ceramic layer, or combination thereof.
14. The article of any preceding clause, wherein each of said bond coat and said layers of said environmental barrier coating comprises continuous layers.
15. The article of any preceding clause, wherein said environmental barrier coating and said patterned abradable coating are capable of withstanding operating temperatures of at least 2,400 degrees Fahrenheit.
16. The article of any preceding clause, wherein said substrate comprises a component of a gas turbine assembly.
17. The article of any preceding clause, wherein said substrate comprises a shroud of a turbine with an outer surface of said abradable layer disposed adjacent to tips of rotating turbine blades.
18. A method for forming an article, the method comprising:
   providing a substrate;
   forming a bond coat disposed on the substrate;
   forming an intermediate layer on the bond coat;
   forming a sealing layer on the intermediate layer;
   forming first top coat on the sealing layer;
   forming a second top coat on the first top coat; and
   forming a patterned abradable coating on the second top coat.
19. The method of any preceding clause, wherein forming the patterned abradable coating comprises forming the patterned abradable coating comprising solid portions defining voids.
20. The method of any preceding clause, wherein said solid portions comprises tapered sides extending generally though the thickness of said patterned abradable coating.
21. The method of any preceding clause, wherein:
   the bond coat comprises silicon;
   the intermediate layer comprises a rare earth disilicate;
   the said sealing layer comprises barium strontium aluminosilicate;
   the first top coat comprises a rare earth disilicate; and
   the second top coat comprises a rare earth monosilicate.
22. The method of any preceding clause, wherein each of the forming of the bond coat, first intermediate layer, the sealing layer, the first top coat, the second top coat comprises forming continuous coating layers.
23. The method of any preceding clause, wherein forming the patterned abradable coating comprises forming the patterned abradable coating comprising solid portions defining voids.
24. The method of any preceding clause, wherein said solid portions comprises tapered sides extending generally though the thickness of said patterned abradable coating.

## Claims

1. An article (10) comprising:
a substrate (20);
a bond coat (30) disposed on said substrate (20);
an environmental barrier coating (40) disposed on said bond coat (30), said environmental barrier coating (40) comprising:
an intermediate layer (42) disposed on said bond coat (30) ;
a sealing layer (44) disposed on said intermediate layer (42);
a first top coat (46) disposed on said sealing layer (44);
a second top coat (48) disposed on said first top coat (46), said first top coat (46) being different from said second top coat (48); and
a patterned abradable coating (50) disposed on said second top coat (48).

2. The article (10) of claim 1 wherein said patterned abradable coating (50) comprises solid portions and voids.

3. The article (10) of claim 2 wherein said solid portions comprises tapered sides extending generally though the thickness of said patterned abradable coating (50).

4. The article (10) of any preceding claim, wherein:
said bond coat (30) comprises silicon;
said intermediate layer (42) comprises a rare earth disilicate;
said sealing layer (44) comprises barium strontium aluminosilicate;
said first top coat (46) comprises a rare earth disilicate; and
said second top coat (48) comprises a rare earth monosilicate.

5. The article (10) of claim 4 wherein said patterned abradable coating (50) comprises solid portions and voids.

6. The article (10) of any preceding claim, wherein said solid portions comprises tapered sides extending generally though the thickness of said patterned abradable coating (50).

7. The article (10) of any preceding claim, wherein said substrate (20) comprises a ceramic matrix composite, a monolithic ceramic layer, or combination thereof.

8. The article (10) according to any preceding claim, wherein said bond coat (30) comprises silicon.

9. The article (10) according to any preceding claim, wherein said sealing layer (44) comprises at least one hermetic self-sealing layer formed from a mixture comprising an alkaline earth metal aluminosilicate and a rare-earth silicate.

10. The article (10) according to any preceding claim, wherein said sealing layer (44) comprises barium strontium aluminosilicate.

11. The article (10) of any preceding claim, wherein said abradable coating (50) comprises zirconia.

12. The article (10) of any preceding claim, wherein said substrate (20) comprises a ceramic matrix composite, a monolithic ceramic layer, or combination thereof.

13. The article (10) of any preceding claim, wherein each of said bond coat (30) and said layers of said environmental barrier coating comprises continuous layers.

14. A method (300) or forming an article (10), the method comprising:
providing a substrate (20);
forming a bond coat (30) disposed on the substrate (20);
forming an intermediate layer (42) on the bond coat (30);
forming a sealing layer (44) on the intermediate layer (42);
forming first top coat (46) on the sealing layer (44);
forming a second top coat (48) on the first top coat (46); and
forming a patterned abradable coating (50) on the second top coat (48).

15. The method (300) of claim 14, wherein forming the patterned abradable coating (50) comprises forming the patterned abradable coating (50) comprising solid portions defining voids.
